# EUROPÄISCHE PATENTSCHRIFT

(11) **EP 0 399 259 B1**
(45) Veröffentlichungstag und Bekanntmachung des Hinweises auf die Patenterteilung: **05.01.1994**
(21) Anmeldenummer: 90108407.9
(22) Anmeldetag: 04.05.1990
(51) Int. Cl.: F16C 19/54, F16C 19/49

(54) **Axial-Radialwälzlager**
Axial radial rolling bearing
Palier axial radial à roulement

(30) Priorität: 20.05.1989 DE 8906246 U
(43) Veröffentlichungstag der Anmeldung: 28.11.1990
(73) Patentinhaber: INA Wälzlager Schaeffler KG, 91063 Herzogenaurach (DE)
(72) Erfinder: Müntnich, Leo, D-8521 Aurachtal (DE); Adler, Hellmut, Dipl.-Ing., D-8522 Herzogenaurach (DE); Mayer, Ernst, Dr. Ing., D-8521 Grossenseebach (DE)

(56) Entgegenhaltungen:
- EP-A- 0 234 469
- FR-A- 1 377 209
- FR-A- 2 513 334
- GB-A- 1 187 290

## Beschreibung

Die Erfindung betrifft ein Axial-Radialwälzlager, bestehend aus ersten Wälzkörpern, die zur Aufnahme von Axialkräften zwischen planparallelen Laufbahnen zweier Laufscheiben angeordnet sind, zweiten in einer Reihe angeordneten Wälzkörpern, die zur Aufnahme von Radialkräften zwischen sich im wesentlichen axial erstreckenden Borden angeordnet sind, wobei die Borde an benachbarten peripheren Kanten der Laufscheiben ausgebildet sind, sich in unterschiedliche axiale Richtungen erstrecken und sich wenigstens über einen Teil ihrer Länge überdecken.

Ein Axial-Radialwälzlager der vorgenannten Gattung ist bekannt aus der EP-A-02 34 469. Dabei sind drei Laufscheiben vorgesehen, zwischen denen zwei Reihen von Wälzkörpern zur Aufnahme von Axialkräften abrollen. Diese beiden Reihen von Wälzkörpern sind in unterschiedlichen Querebenen, das heißt, jeweils mit einem axialen Abstand ihrer Querebenen zueinander angeordnet. Ein außerdem vorgesehenes Radiallager ist in einer dritten Querebene angeordnet. Aufgrund dieser Ausbildung des Axial-Radialwälzlagers ist dessen axiale Baulänge relativ groß, so daß entsprechender Bauraum zur Verfügung stehen muß. Ein weiterer Nachteil besteht darin, daß die Laufscheiben erst mit Hilfe eines Verbindungs- bzw. Zusammenbauelements, das nach Art eines eingeschlagenen Zapfens bzw. eines Schraubenbolzens oder eines Niets ausgebildet ist, zueinander fixiert sind. Eine derartige axiale Fixierung wird somit erst durch das zu lagernde Bauteil hergestellt, so daß das Axial-Radialwälzlager im nicht eingebauten Zustand nicht für seinen Transport und seine Montage vorbereitet ist.

Der Erfindung liegt die Aufgabe zugrunde, ein Axial-Radialwälzlager zu schaffen, das mit einem geringeren Platzbedarf auskommt und das sowohl beim Transport als auch bei der Montage problemlos zu handhaben ist.

Erfindungsgemäß wird diese Aufgabe dadurch gelöst, daß die ersten Wälzkörper in Form einer einzigen Reihe vorgesehen sind und daß diese Reihe und die die Radialkräfte aufnehmende Reihe radial übereinander in einer Ebene angeordnet sind. Durch diese Maßnahme läßt sich der axiale Bauraum beträchtlich verringern, ohne daß Tragzahlverluste in Kauf genommen werden müssen.

In weiterer Ausgestaltung der Erfindung ist vorgesehen, daß in beiden Wälzkörperreihen zylindrische Wälzkörper angeordnet sind. Eine solche Ausbildung ist dann vorteilhaft, wenn sowohl axial als auch radial relativ große Kräfte aufgenommen werden müssen. Mit einfachen Mitteln ist es auch hier möglich, eine einbaufertige Baueinheit zu bilden.

Eine vorteilhafte Weiterbildung der Erfindung sieht vor, daß in der die Radialkräfte aufnehmenden Reihe von Wälzkörpern Kugeln angeordnet sind, die in in den Borden ausgearbeiteten Kugellaufrillen abrollen. Durch die vorgeschlagene Maßnahme wird nicht nur eine Bauraumreduzierung, sondern in besonders einfacher Weise eine Baueinheit erzielt, durch die insbesondere die Montage wesentlich erleichtert wird.

Mit besonderem Vorteil ist in Weiterbildung der Erfindung die Ausbildung so getroffen, daß die Laufscheiben aus spanlos gefertigten Blechteilen gebildet sind. In derartige Laufscheiben können die Kugellaufrillen in besonders einfacher Weise eingerollt werden.

Weiterhin ist nach einer Ausgestaltung der Erfindung vorgesehen, daß wenigstens eine der Laufscheiben an der den Borden abgewandten peripheren Kante mit einem axial gerichteten Bord oder Kragen versehen ist. Eine solche Ausbildung gestattet auch bei der Anordnung von zylindrischen Wälzkörpern in den beiden Wälzkörperreihen in einfacher Weise eine Baueinheit zu bilden oder die mit dem Kragen versehene Laufscheibe über den Kragen zu zentrieren oder in einer Bohrung zu befestigen.

Ausführungsbeispiele der Erfindung sind in der Zeichnung dargestellt und werden nachfolgend näher beschrieben.

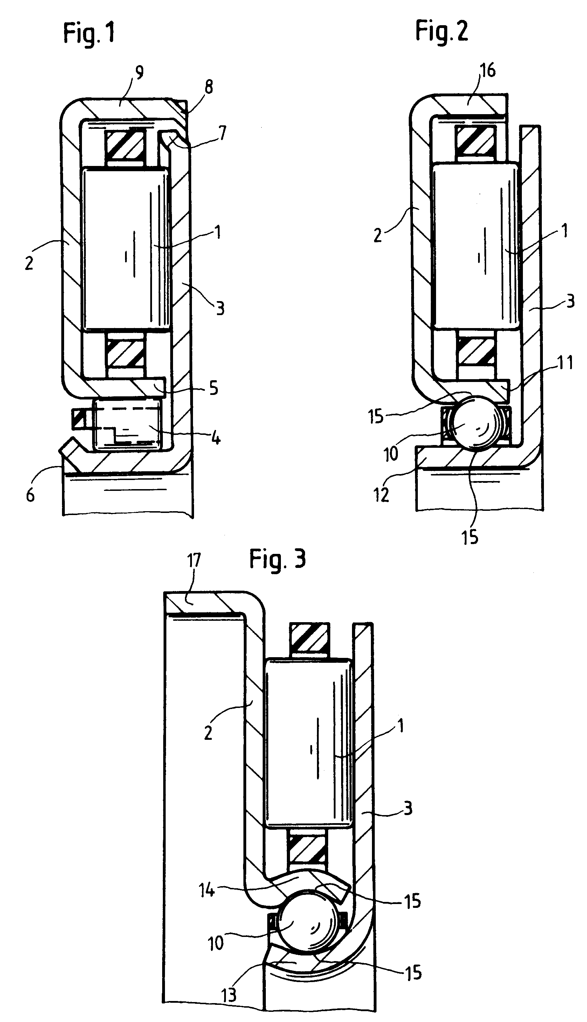

Die Figuren 1 bis 3 zeigen verschiedene Ausführungsbeispiele eines erfindungsgemäßen Axial-Radiallagers in teilweisem Längsschnitt.

Das erfindungsgemäße Axial-Radiallager nach den Figuren 1 bis 3 besteht aus einer ersten Reihe von zylindrischen Wälzkörpern 1, die zur Aufnahme von Axialkräften zwischen planparallelen Laufbahnen zweier Laufscheiben 2 und 3 angeordnet sind.

Gemäß Figur 1 sind zur Aufnahme von Radialkräften ebenfalls zylindrische Wälzkörper 4 angeordnet, die auf sich axial erstreckenden Borden 5 und 6 abrollen, die an benachbarten peripheren Kanten der Laufscheiben 2 und 3 ausgebildet sind. Die Borde 5 und 6 erstrecken sich dabei in unterschiedliche axiale Richtungen und überdecken sich über ihre gesamte Länge. Die Wälzkörperreihen der zylindrischen Wälzkörper 1 und 4 sind radial übereinander und in einer Ebene angeordnet.

Zur Bildung einer Baueinheit ist die Laufscheibe 3 an ihrer dem Bord 6 abgewandten Kante 7 axial eingezogen und wird von Nasen oder einem umlaufenden Rand 8 übergriffen, der an einem axial gerichteten Bord 9 der Laufscheibe 2 ausgebildet ist. Das freie Ende des Bordes 6 weist ebenfalls einen umlaufenden Rand auf, der die Wälzkörper 4 übergreift.

Beim Ausführungsbeispiel nach den Figuren 2 und 3 sind in der die Radialkräfte aufnehmenden Reihe von Wälzkörpern Kugeln 10 angeordnet, die in in den Borden 11 und 12 bzw. 13 und 14 ausgebildeten Kugellaufrillen 15 abrollen. Auch bei diesen Ausführungsbeispielen erstrecken sich die Borde 11 und 12 bzw. 13 und 14 in unterschiedliche axiale Richtungen, wobei die zylindrische Wälzkörper 1 und die Kugeln 10 ebenfalls radial in einer Ebene angeordnet sind.

Da die Laufscheiben 2 und 3 aus spanlos gefertigten Blechscheiben gebildet sind, weisen die Borde 11 und 12 bzw. 13 und 14 eine solche Elastizität auf, daß diese zur Bildung einer Baueinheit axial über die Kugeln 10 geschnappt werden können.

Während der Laufring 2 nach Figur 2 an seiner dem Bord 11 abgewandten peripheren Kante ebenfalls einen Bord 16 aufweist, ist an dem Bord 2 gemäß Figur 3 ein axial gerichteter und vom Lager weg weisender Kragen 17 angeformt.

## Patentansprüche

1. Axial-Radialwälzlager, bestehend aus ersten Wälzkörpern (1), die zur Aufnahme von Axialkräften zwischen planparallelen Laufbahnen zweier Laufscheiben (2, 3) angeordnet sind, zweiten in einer Reihe angeordneten Wälzkörpern (4, 10), die zur Aufnahme von Radialkräften zwischen sich im wesentlichen axial erstreckenden Borden (5, 6, 11, 12, 13, 14) angeordnet sind, wobei die Borde (5, 6, 11, 12, 13, 14) an benachbarten peripheren Kanten der Laufscheiben (2, 3) ausgebildet sind, sich in unterschiedliche axiale Richtungen erstrecken und sich wenigstens über einen Teil ihrer Länge überdecken, **dadurch gekennzeichnet**, daß die ersten Wälzkörper (1) in Form einer einzigen Reihe vorgesehen sind und daß diese Reihe und die die Radialkräfte aufnehmende Reihe radial übereinander in einer Ebene angeordnet sind.

2. Axial-Radialwälzlager nach Anspruch 1, **dadurch gekennzeichnet**, daß in beiden Wälzkörperreihen zylindrische Wälzkörper (1, 4) angeordnet sind.

3. Axial-Radialwälzlager nach Anspruch 1, **dadurch gekennzeichnet**, daß in der die Radialkräfte aufnehmenden Reihe von Wälzkörpern Kugeln (10) angeordnet sind, die in in den Borden (11, 12, 13, 14) ausgebildeten Kugellaufrillen (15) abrollen.

4. Axial-Radialwälzlager nach einem der vorhergehenden Ansprüche, **dadurch gekennzeichnet**, daß die Laufscheiben (2, 3) aus spanlos gefertigten Blechteilen gebildet sind.

5. Axial-Radialwälzlager nach einem der vorhergehenden Ansprüche, **dadurch gekennzeichnet**, daß wenigstens eine der Laufscheiben (2) an der den Borden abgewandten peripheren Kante mit einem axial gerichteten Bord (9, 16) oder Kragen (17) versehen ist.

## Claims

1. Axial-radial rolling bearing comprising first rolling elements (1) which, for the absorption of axial forces are arranged between plane-parallel raceways of two race discs (2, 3), and second rolling elements (4, 10) arranged in one row, which, for the absorption of radial forces are arranged between substantially axially extending flanges (5, 6, 11, 12, 13, 14) which are formed on adjacent circumferential edges of the race discs (2, 3) and extend in opposite directions, overlapping each other at least over a part of their length, characterized in that the first rolling elements (1) are provided in the form of one single row and that this row and the row which absorbs the radial forces are arranged radially one above the other in one plane.

2. Axial-radial rolling bearing according to claim 1, characterized in that cylindrical rolling elements (1, 4) are arranged in both rows of rolling elements.

3. Axial-radial rolling bearing according to claim 1, characterized in that the row of rolling elements absorbing radial forces is constituted by balls (10) which roll in ball race grooves (15) formed in the flanges (11, 12, 13, 14).

4. Axial-radial rolling bearing according to one of the preceding claims, characterized in that the race discs (2, 3) are formed from sheet metal parts fabricated without chip removal.

5. Axial-radial rolling bearing according to one of the preceding claims, characterized in that at least one of the race discs (2) comprises on its circumferential edge facing away from the flanges, an axially directed flange (9, 16) or collar (17).

## Revendications

1. Palier à roulement axial-radial comprenant des premiers corps roulants (1) qui, pour l'absorption de forces axiales, sont agencés entre des pistes de roulement à faces parallèles de deux disques de roulement (2, 3), et des deuxièmes corps roulants (4, 10) qui, pour l'absorption de forces radiales, sont disposés en une rangée unique entre des rebords (5, 6, 11, 12, 13, 14) qui s'étendent globalement axialement dans des directions axiales différentes à partir de bords périphériques avoisinants appartenant aux disques de roulement (2, 3), lesdits rebords (5, 6, 11, 12, 13, 14) se recouvrant au moins sur une partie de leur longueur, caractérisé en ce que les premiers corps roulants (1) sont prévus sous la forme d'une rangée unique et que cette rangée et la rangée qui absorbe les forces radiales sont agencées radialement l'une au-dessus de l'autre dans un seul plan.

2. Palier à roulement axial-radial selon la revendication 1, caractérisé en ce que des corps roulants cylindriques (1, 4) sont agencés dans les deux rangées de corps roulants.

3. Palier à roulement axial-radial selon la revendication 1, caractérisé en ce que des billes (10) sont agencées dans la rangée de corps roulants destinée à absorber les forces radiales, lesdites billes (10) roulant dans des rainures de roulement (15) formées dans les rebords (11, 12, 13, 14).

4. Palier à roulement axial-radial selon l'une des revendications précédentes, caractérisé en ce que les disques de roulement (2, 3) sont formés à partir de pièces en tôle fabriquées sans enlèvement de copeaux.

5. Palier à roulement axial-radial selon l'une des revendications précédentes, caractérisé en ce que l'un (2) au moins des disques de roulement comprend sur son bord périphérique opposé aux rebords, un rebord (9, 16) ou collet (17) orienté axialement.
